# EUROPÄISCHE PATENTSCHRIFT

(11) **EP 4 338 393 B1**
(45) Veröffentlichungstag und Bekanntmachung des Hinweises auf die Patenterteilung: **04.03.2026**
(21) Anmeldenummer: 22728497.3
(22) Anmeldetag: 10.05.2022
(51) Int. Cl.: H04L 43/08, H04L 43/0817, H04L 43/16, H04L 41/14

(54) **ÜBERWACHUNGSVORRICHTUNG FÜR EINEN DATEN-ROUTER SOWIE VERFAHREN ZUM ÜBERWACHEN EINES DATEN-ROUTERS**
MONITORING DEVICE FOR A DATA ROUTER, AND METHOD FOR MONITORING A DATA ROUTER
DISPOSITIF DE SURVEILLANCE POUR UN ROUTEUR DE DONNÉES ET PROCÉDÉ DE SURVEILLANCE D'UN ROUTEUR DE DONNÉES

(30) Priorität: 10.05.2021 DE 102021112179
(43) Veröffentlichungstag der Anmeldung: 20.03.2024
(73) Patentinhaber: Keeconn GmbH, 14979 Großbeeren (DE)
(72) Erfinder: RULFS, Jan-Rewert, 10785 Berlin (DE)
(74) Vertreter: Eisenführ Speiser
(86) Internationale Anmeldenummer: PCT/EP2022/062571
(87) Internationale Veröffentlichungsnummer: WO 2022/238369

(56) Entgegenhaltungen:
- WO-A2-2006/047583
- CH-A5- 696 101
- US-A- 6 065 053

## Beschreibung

Die Erfindung betrifft ein System umfassend einen Daten-Router und eine mit dem Daten-Router verbundene oder in diesen integrierte Überwachungsvorrichtung. Die Erfindung betrifft außerdem eine Überwachungsvorrichtung für einen Daten-Router sowie ein Verfahren zum Überwachen eines Daten-Routers.

Daten-Router - oder auch kurz: Router - haben die Aufgabe Datenpakete zwischen mehreren Datenverarbeitungsgeräten, z.B. Computern oder eingebetteten Systemen (embedded systems), in einem Datennetzwerk weiterzuleiten können. Daten-Router werden zum Beispiel zur Internetanbindung von lokalen Datenverarbeitungsgeräten genutzt. Datenrouter können als Mobilfunkrouter dazu ausgebildet sein, Datenpakete über das Mobilfunknetz zu vermitteln. Dies ist insbesondere dort hilfreich, wo für die Anbindung eines Datenverarbeitungsgeräts kein kabelgebundenes Datennetzwerk zur Verfügung steht.

Router treffen ihre Weiterleitungsentscheidung anhand von Informationen aus der Netzwerk-Schicht 3 (für das IP-Protokoll ist das der Netzwerkanteil in der IP-Adresse). Viele Router übersetzen zudem zwischen privaten und öffentlichen IP-Adressen (Network Address Translation (NAT) bzw. Port Address Translation (PAT)) oder bilden Firewall-Funktionen durch ein Regelwerk ab.

Einsatzgebiet für Router sind unter anderem auch Trafostationen und Ladesäulen, die regelmäßig an das Internet angeschlossen sind. Im speziellen Falle von Trafostationen sind diese häufig weit ab von Ortschaften z.B. in der Nähe von Solarfeldern gelegen. Router müssen typischerweise in längeren Zeitabschnitten neu gestartet werden, weil sie sich beispielsweise "aufgehängt" haben. Durch ungünstige Ereignisse kann nämlich bei Routern ein "Absturz" auftreten, der auch als "Einfrieren" oder "Freeze" bekannt ist. In diesem Fall ist die über den Router aufgebaute Datenverbindung dauerhaft unterbrochen.

Um die Datenverbindung wiederherstellen zu können, wird in einem solchen Fall seitens des Herstellers oftmals zu einem Reset des Routers geraten.

Bekannt ist es, Router automatisch dann neu zu starten, wenn eine Überwachungseinheit - bspw. in Form von Software - erfasst, dass ein Router keine Verbindung zum Internet mehr hat. Dazu muss die Überwachungseinheit den Datenverkehr überwachen, der durch den Router hindurch erfolgt. So existieren bereits Produkte, welche auch einen Reset des Routers erzwingen (z.B. "resetplug.com"). Hierzu verbinden sich diese Produkte als WiFi-Client (WLAN Client) mit dem Router, was den Einsatz auf WiFi-fähige Router beschränkt. Ferner stellt ein solches Konzept eine potentielle Sicherheitslücke dar.

Weil letzteres unbefriedigend ist, besteht Bedarf nach alternativen Mitteln, die eine automatisches Neustarten des Routers bewirken können. Eine einfache Lösung besteht darin, den Router in regelmäßigen vorgegebenen Abständen - nach dem Prinzip einer Zeitschaltuhr - neu zu starten. Wenn hierbei die Abstände zu groß gewählt sind, kann es dabei immer noch vorkommen, dass ein Router für einen nennenswerten Zeitraum keine Internetverbindung bereitstellen kann. Zu kurze Abstände für das Neustarten des Routers haben den Nachteil, dass der Router zu oft neu gestartet werden muss, was zu unnötigen Verlusten der Datenverbindung führt.

WO 2006/047583 A2 beschreibt Techniken zum Neustarten von Computersystem-Hardware von einem entfernten Standort aus.

Erfindungsgemäß wird vorgeschlagen, eine Überwachungsvorrichtung vorzusehen, die die Energie- oder die Leistungsaufnahme des Daten-Routers überwacht und das Neustarten des Daten-Routers in Abhängigkeit von dessen Energie- oder Leistungsaufnahme auslöst. Die erfindungsgemäße Überwachungsvorrichtung erkennt den Absturz bzw. das Einfrieren des Daten-Routers und veranlasst selbstständig einen Reset oder einen Neustart des Daten-Routers.

Die erfindungsgemäße Lösung schließt die Erkenntnis ein, dass die Leistungsaufnahme des Daten-Routers davon abhängt, ob der Daten-Router Datenpakete versendet oder empfängt. Werden tatsächlich Datenpakete übertragen, ist die Leistungsaufnahme höher, als zu Zeitpunkten, zu denen keine Daten übertragen werden. Typischerweise übermittelt ein Daten-Router in regelmäßigen kurzen Abständen von einigen Sekunden oder Minuten immer wieder Datenpakete, um den Kontakt zu einer Basisstation (im Falle eines Mobilfunkrouters) oder zum nächsten Internetknoten zu halten oder herzustellen. Dies führt dazu, dass die Leistungsaufnehme eines funktionsfähigen Daten-Routers über einen Betrachtungszeitraum von einigen Minuten schwankt. Bleibt die Leistungsaufnahme hingegen annähernd konstant - vor allem konstant niedrig - ist dies ein Indiz dafür, dass der Daten-Router nicht mehr betriebsbereit ist und neu gestartet werden muss. Entsprechend kann eine erfindungsgemäße Überwachungsvorrichtung derart ausgebildet sein, dass sie einen Neustart des Daten-Routers veranlasst, wenn dessen Leistungsaufnahme über einen Beobachtungszeitraum von einigen Minuten konstant, insbesondere konstant niedrig bleibt und z.B. einem zuvor erfassten Mittelwert für die Leistungsaufnahme des Daten-Routers im Ruhezustand - d.h. ohne aktive Datenverbindung - entspricht.

Entsprechendes gilt für Energieaufnahme des Daten-Routers innerhalb eines bestimmten Zeitraums. Die innerhalb eines Zeitraums von dem Daten-Router aufgenommene Energie repräsentiert die mittlere Leistungsaufnahme des Datenrouters in diesem Zeitraum.

Mobilfunkrouter brauchen zum Herstellen einer Datenverbindung zur nächsten Basisstation typischerweise jeweils eine Mindestleistung, die unter anderem vom Abstand des Routers zur Basisstation abhängt. Ein Daten-Router, der keine Verbindung zur Basisstation hat, braucht auch diese Mindestleistung nicht aufzubringen und damit auch nicht aufzunehmen. Entsprechend kann die Überwachungsvorrichtung ausgebildet sein, zu überwachen, ob ein Daten-Router an einem jeweiligen Standort die Mindestleistung aufnimmt, die nötig ist, um eine Verbindung zur nächsten Basisstation aufrecht zu erhalten. Nimmt der Daten-Router diese - vorzugsweise standortindividuelle - Mindestleistung oder eine die Mindestleitung übersteigende Leistung nicht mehr auf, sondern eine geringere Leistung, ist dies ein Indiz dafür, dass der Daten-Router keine Verbindung zur Basisstation hat. Dies kann wiederum ein Kriterium sein, welches die Überwachungsvorrichtung dazu veranlasst, den Daten-Router neu zu starten.

Eine erfindungsgemäße Überwachungsvorrichtung, die einen Reset oder einen Neustart eines Daten-Routers in Abhängigkeit von dessen Leistungs- oder Energieaufnahme auslöst, hat den Vorteil, dass sie allein auf die Leistungsaufnahme des Daten-Routers oder einer Komponente oder Einheit des Daten-Routers, deren Leistungsaufnahme mit dem Übertragen von Daten korreliert, abstellt und keine Informationen über den Datenstrom benötigt, der über den Daten-Router fließt oder auch nicht fließt. Damit benötigt eine derartige Überwachungsvorrichtung auch kein Dateninterface zu dem Router. Vielmehr setzt die Überwachungsvorrichtung allein bei der Stromversorgung des Daten-Routers an. Dadurch, dass keine Datenverbindung zum Daten-Router nötig ist, wie es andere Produkte erfordern, kann keine potentielle Sicherheitslücke entstehen.

Ferner ist die Erfindung durch das Messprinzip universell einsetzbar, sodass auch Router ohne WiFi bzw. WLAN überwacht werden können.

In einer bevorzugten Ausführungsvariante erfasst die Überwachungsvorrichtung die Leistungsaufnahme des Daten-Routers an dessen Stromversorgungseingang, also dort, wo dem Daten-Router die für dessen Betrieb erforderliche Leistung zugeführt wird. Alternativ kann die Überwachungsvorrichtung aber auch dazu ausgebildet sein, die Leistungsaufnahme an einer Komponente oder einer Einheit des Daten-Routers zu erfassen, deren Leistungsaufnahme mit dem regulären Betrieb des Daten-Routers korreliert. Eine solche Einheit oder Komponente ist beispielsweise das Modem des Daten-Routers, insbesondere ein Mobilfunkmodem mit einem entsprechenden Mobilfunksender und -empfänger. Insbesondere kann die Strom- oder Leistungsaufnahme der Prozessoreinheit des Daten-Modems oder des Daten-Routers, des Transceiver-Moduls des Daten-Modems oder des Funk-Moduls des Daten-Modems erfasst werden.

Die Überwachungsvorrichtung kann derart ausgebildet sein, dass die Überwachungskriterien und die Kriterien für das Neustarten oder den Reset des Daten-Routers einstellbar sind, so dass sie beispielsweise an die jeweiligen aktuellen Gegebenheiten anpassbar sind. Überwachungskriterien und die Kriterien für das Neustarten oder den Reset des Daten-Routers können Werte - insbesondere Grenzwerte - für überwachte oder erfasste Parameter wie beispielsweise die momentan aufgenommene Leistung oder die innerhalb eines vergebenen Zeitraums aufgenommene Energie (entsprechend der in diesem Zeitraum aufgenommenen mittleren Leistung) sein.

Besonders bevorzugt ist es, wenn die Überwachungsvorrichtung "trainiert" oder "angelernt" werden kann, um die jeweils gegebenen Verhältnisse automatisch zu lernen.

Beispielsweise kann die Überwachungsvorrichtung ausgebildet sein, in einer Lernphase einen Wert für eine minimale Energiemenge, die der Daten-Router innerhalb einer vorgegebenen Zeitdauer aufnimmt, zu ermitteln und aus diesem Wert einen Grenzwert für die Energiemenge abzuleiten, bei deren Unterschreiten eine Reset oder ein Neustart des Daten-Routers ausgelöst wird.

Die Überwachungsvorrichtung kann auch mit einem neuronalen Netz versehen sein, das mit Trainingsdatensätzen trainiert ist, die den Verlauf der Leistungsaufnahme des Daten-Routers über die Zeit für den Fall repräsentieren, dass der Daten-Router betriebsbereit ist und eine Internetverbindung zum nächsten Knoten besteht. Das neuronale Netz kann als binärer Klassifikator ausgebildet sein, der den jeweils aktuellen Verlauf der Leistungsaufnahme des Daten-Routers repräsentierende Datensätze entweder der Zustandsklasse zuordnet, für die das neuronale Netz trainiert ist (z.B. für den Fall, dass eine Datenverbindung zum Internet besteht) - oder nicht dieser Zustandsklasse. Lässt sich ein aktueller Datensatz nicht der Zustandsklasse zuordnen, die einen funktionsfähigen Daten-Router repräsentiert, gibt das neuronale Netz einen entsprechend niedrigen Zugehörigkeitswert aus, der wiederum das Kriterium dafür sein kann, dass der Daten-Router neu gestartet wird.

Ein als binärer Klassifikator konfiguriertes neuronales Netz einer Überwachungsvorrichtung kann auch mit Trainingsdatensätzen trainiert sein, die die den Verlauf der Leistungsaufnahme des Daten-Routers für den Fall repräsentieren, dass der Daten-Router nicht betriebsbereit ist oder keine Datenverbindung besteht. In diesem Fall ist die Überwachungsvorrichtung dazu ausgebildet, einen Reset oder einen Neustart des Daten-Routers auszulösen, wenn das neuronale Netz - also der z.B. der binäre Klassifikator - einen eine aktuelle Leistungsaufnahme repräsentierenden Datensatz der Zustandsklasse zuordnet, für die das neuronale Netz trainiert ist. Ein hoher Zugehörigkeitswert zu der Zustandsklasse "Daten-Router nicht ok" kann also als Kriterium für das Neustarten oder den Reset des Daten-Routers genutzt werden.

Eine Überwachungsvorrichtung mit einem neuronalen Netz bietet den Vorteil, dass das Prüfkriterium, das zum Auslösen eines Neustarts oder Resets des Daten-Routers führt, kein einfacher Schwellwert oder Grenzwertvergleich ist, sondern ein Muster der Leistungsaufnahme des Daten-Routers repräsentiert. Damit kann die Überwachungsvorrichtung genauer auf standortspezifische Eigenheiten des Daten-Routers und dessen Leistungsaufnahme abgestimmt werden.

Die Datensätze - und somit auch die Trainingsdatensätze - sind vorzugsweise Datentupel, die den Verlauf der Leistungsaufnahme des Daten-Routers über einen vorgegebenen Zeitraum von vorzugsweise wenigen Minuten repräsentieren. Entsprechend ist die Überwachungsvorrichtung vorzugsweise dazu ausgebildet, die Leistungsaufnahme des Daten-Routers über den entsprechenden Zeitraum zu erfassen und Leistungswerte vorzugsweise zu samplen (abzutasten) und zu digitalisieren. Die Leistungserfassung erfolgt vorzugsweise jeweils in einem gleitenden Zeitfenster (sliding window).

Die Überwachungsvorrichtung weist vorzugsweise eine mikrocontrollergesteuerte, elektronische Schaltung als Erfassungseinheit auf. Diese ist dazu ausgebildet, fortlaufend die Stromaufnahme eines beliebigen, nachgeschalteten Daten-Routers zu erfassen. Vorzugsweise wird die Stromaufnahme durch eine Auswerteeinheit analysiert und ausgewertet. Die Auswerteeinheit kann das bereits erwähnte neuronale Netz enthalten.

Alternativ kann die Erfassungseinheit aber auch dazu ausgebildet sein, die Leistungsaufnahme einer Komponente oder Einheit des Daten-Routers zu erfassen, deren Leistungsaufnahme mit dem Übertragen von Daten korreliert. Vorzugsweise ist dies ein Daten-Modem des Daten-Routers. Insbesondere kann die Strom- oder Leistungsaufnahme der Prozessoreinheit des Daten-Modems oder des Daten-Routers, des Transceiver-Moduls des Daten-Modems oder des Funk-Modul des Daten-Modems erfasst werden.

Die Auswerteeinheit der Überwachungsvorrichtung ist mit der Erfassungseinheit verbunden und dazu ausgebildet, das Ausgangssignal der Erfassungseinheit hinsichtlich wenigstens eines Prüfkriteriums zu analysieren und bei Erfüllen des Prüfkriteriums einen Reset oder einen Neustart des Daten-Routers auszulösen. Hierfür kann die Auswerteeinheit das bereits erwähnte neuronale Netz aufweisen, wobei das von der Erfassungseinheit gelieferte Ausgangssignal Datensätze umfasst, die den jeweils aktuellen zeitlichen Verlauf der Leistungsaufnahme des Daten-Routers repräsentieren.

Ergibt die Auswertung durch die Auswerteeinheit, dass bei dem Gerät der Fall des "Absturz" / "Einfrieren" eingetreten ist, wird die vorzugsweise die Stromversorgung des Routers kurzzeitig unterbrochen und wiederhergestellt. Dies führt zu einem erzwungenen Reset des Routers oder zumindest eines Teils des Routers, z.B. desjenigen Teils des Routers, der für eine externe Datenverbindung zuständig ist.

Ein erfindungsgemäßes Verfahren zum Überwachen eines Daten-Routers umfasst die Schritte:
Erfassen mindestens eines mit der Leistungsaufnahme eines Datenrouters korrelierten Messwerts,
Prüfen des Messwerts anhand eines Referenzkriteriums;
Neustarten oder Zurücksetzen (Reset) des Routers in Abhängigkeit des Prüfergebnisses.

Der mit der Leistungsaufnahme eines Datenrouters korrelierte Messwert kann beispielsweise die Stromstärke des von dem Router aufgenommenen Stroms sein.

Das Prüfen des Messwerts anhand eines Referenzkriteriums kann beispielsweise ein Vergleich mit einem Referenzwert sein. Der Referenzwert kann beispielsweise die Mindest-Energie oder die Mindest-Strommenge (elektrische Ladung) sein, die der Router im betriebsfähigen Zustand innerhalb einer vorgegebenen Zeitdauer von vorzugsweise einigen Minuten aufnimmt. Das Referenzkriterium kann aber auch durch eine mit entsprechenden Trainingsdatensätzen trainiertes neuronales Netz, insbesondere ein neuronales Netz in Form eines binären Klassifikators (binary classifier) gebildet sein.

Das Neustarten des Routers kann durch eine kurzzeitige Unterbrechung der Stromzufuhr zu dem Router bewirkt werden oder durch Abgabe eines Reset-Signals an den Daten-Router über eine entsprechende Steuerleitung.

Ein weiterer Aspekt ist die Verwendung eines Systems aus einen Daten-Router und einer mit diesem verbundenen oder in diesen integrierte Überwachungsvorrichtung und/oder einer Überwachungsvorrichtung der hier beschriebenen Art in einer Datenverarbeitungseinrichtung einer Monitoringeinrichtung einer Anlage zur Gewinnung erneuerbarer Energie oder in einer Ladesäule für Elektrofahrzeug oder ähnliches. Anlagen zur Gewinnung erneuerbarer Energie, wie beispielsweise Windenergieanlagen oder Photovoltaikanalgen weisen typischerweise Datenverarbeitungseinrichtungen auf, die z.B. die Einspeisung gewonnener Energie in das Stromnetz überwachen. Anlagen zur Gewinnung erneuerbarer Energie befinden sich häufig an abgelegenen Standorten, so dass sie auf eine zuverlässige Anbindung an das Internet angewiesen sind. Ein automatisiertes Neustarten eines eingefrorenen Daten-Routers mit Hilfe der hier vorgestellten Überwachungsvorrichtung ist daher sehr hilfreich. Entsprechendes gilt für Ladesäule für Elektrofahrzeuge. Bei Ladesäulen kommt noch hinzu, dass für diese ein über einen längeren Zeitraum eingefrorener Daten-Router die Ladesäule für den entsprechenden Zeitraum unbrauchbar macht, da in diesem Zeitraum getankter Strom nicht abgerechnet werden kann. Die Erfindung soll nun anhand von Ausführungsbeispielen mit Bezug auf die Figuren näher erläutert werden. Von den Figuren zeigt:
Fig. 1:eine erste Variante eines erfindungsgemäßen Systems mit einem Daten-Router mit integriertem Netzteil und einer Überwachungsvorrichtung in einer vereinfachten, schematischen Blockdarstellung;
Fig. 2:eine erste Variante eines erfindungsgemäßen Systems mit einem Daten-Router mit externem Netzteil und einer Überwachungsvorrichtung in einer vereinfachten, schematischen Blockdarstellung;
Fig. 3:eine zweite Variante eines erfindungsgemäßen Systems mit einem Daten-Router und einer Überwachungsvorrichtung in einer vereinfachten, schematischen Blockdarstellung;
Fig. 4:eine detailliertere Darstellung einer erfindungsgemäßen Überwachungsvorrichtung mit neuronalem Netzwerk; und
Fig. 5:eine detailliertere Darstellung einer erfindungsgemäßen Überwachungsvorrichtung mit einem Parameterspeicher für eine Auswerteeinheit
Fig. 6:eine dritte Variante eines erfindungsgemäßen Systems mit einem Daten-Router und einer Überwachungsvorrichtung in einer vereinfachten, schematischen Blockdarstellung;
Fig. 7:eine vierte Variante eines erfindungsgemäßen Systems mit einem Daten-Router und einer Überwachungsvorrichtung in einer vereinfachten, schematischen Blockdarstellung; und
Fig. 8:ein externes Netzteil, das dazu ausgebildet ist, fortlaufend die abgegebene Leistung zu erfassen und bei Erfüllen des Prüfkriteriums eine kurzzeitige Unterbrechung der Leistungsabgabe durch das Netzteil zu bewirken.

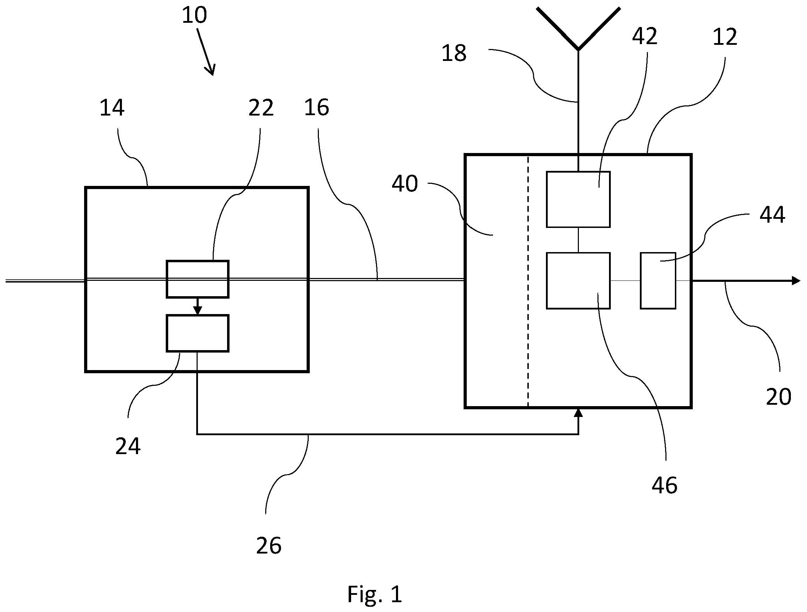

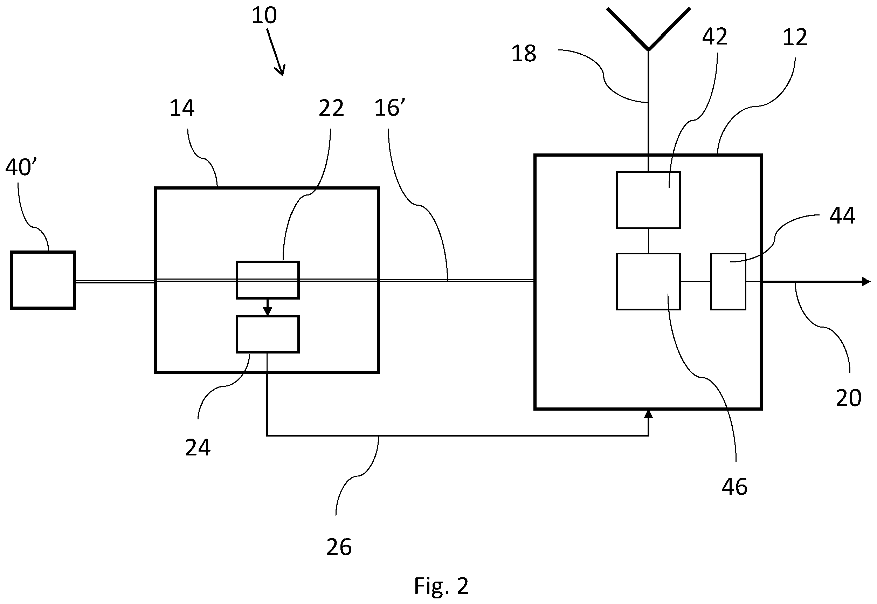

Ein erfindungsgemäßes System 10 weist einen Daten-Router 12 und eine Überwachungsvorrichtung 14. Der Daten-Router 12 weist eine Stromversorgungsleitung 16 auf, über die der Daten-Router 12 - insbesondere dessen Netzteil 40 - mit der für den Betrieb des Daten-Routers 12 notwendigen elektrischen Leistung versorgt wird. Das Netzteil 40 kann in den Daten-Router 12 integriert sein. Das Netzteil 40' kann aber auch ein separates Netzteil sein, das mittels eines Kabels als Gleichspannungs-Stromversorgungsleitung 16' mit dem Stromversorgungseingang des Daten-Routers 12 verbunden ist.; siehe Figur 2 Der Daten-Router 12 kann beispielsweise ein Mobilfunkrouter mit einem Mobilfunkmodem 42 sein und eine Antenne 18 aufweisen, um drahtlos Datenpakete empfangen oder übertragen zu können. An den Daten-Router 12 und insbesondere dessen Prozessoreinheit 46 können über entsprechende drahtlose oder drahtgebundene Interfaces 44 Datenverarbeitungsgeräte angeschlossen sein, die beispielsweise mit dem Internet verbunden werden sollen. Beispielhaft ist eine entsprechende Datenleitung 20 in Figuren 1 und 2 dargestellt. Die an den Daten-Router 12 angeschlossenen Datenverarbeitungsgeräte können aber auch drahtlos, beispielsweise über Wireless LAN (WiFi) mit dem Daten-Router 12 verbunden sein.

Im regulären Betrieb nimmt der Daten-Router 12 immer wieder Kontakt beispielsweise mit einer Basisstation auf. Hierfür ist eine elektrische Mindestleistung erforderlich. Im Falle einer Betriebsstörung des Daten-Routers 12 kann es sein, dass dieser "einfriert" und dann keine Datenverbindung mehr zu einer Basisstation herstellen kann. Dies führt dazu, dass die Leistungsaufnahme des Daten-Routers 12 durchgehend sehr niedrig ist, und nicht die charakteristischen Mindestleistungsspitzen aufweist, die im Falle einer aktiven Datenverbindung zwischen dem Daten-Router 12 und einer Basisstation auftreten.

Um eine mögliche Fehlfunktion des Daten-Routers 12 erkennen zu können, ist die Überwachungsvorrichtung 14 vorgesehen. Diese weist eine Erfassungseinheit 22 auf, die beispielsweise in Form einer vorzugsweise mikrocontrollergesteuerten elektronischen Schaltung realisiert sein kann und die dazu konfiguriert ist, die Strom- oder Leistungsaufnahme des Daten-Routers 12 über die Stromversorgungsleitung 16 zu erfassen und Messwerte zu liefern, die die Strom- bzw. Leistungsaufnahme repräsentieren. Wenn das Netzteil für den Daten-Router 12 ein separates Netzteil ist, das mittels eines Kabel mit einem Stromversorgungseingang des Daten-Routers 12 verbunden ist, führt das Kabel 16 typischerweise die für den Betrieb des Daten-Routers Gleichspannung. Auch in diesem Fall ist die Erfassungseinheit 22 dazu ausgebildet, die Strom- oder Leistungsaufnahme des Daten-Routers 12 über die Stromversorgungsleitung 16 zu erfassen.

Die Erfassungseinheit 22 ist mit einer Auswerteeinheit 24 verbunden, die dazu ausgebildet ist, die von der Erfassungseinheit 22 gebildeten Messwerte auszuwerten und insbesondere im Hinblick auf ein Prüfkriterium zu prüfen. Das Prüfkriterium ist so gewählt, dass es eine charakteristische Leistungsaufnahme des Daten-Routers 12 in dessen regulären Betrieb repräsentiert oder - alternativ- eine charakteristische Leistungsaufnahme des Daten-Routers 12, wenn dieser "abgestürzt" oder "eingefroren" ist.

Die Auswerteeinheit 24 ist so konfiguriert, dass sie einen Reset oder Neustart des Daten-Routers 12 bewirkt, wenn die Prüfung anhand des Prüfkriteriums ergibt, dass der Daten-Router 12 nicht die für den regulären Betrieb charakteristische Leistungsaufnahme zeigt, sondern insbesondere eine geringere Leistungsaufnahme.

Ein Prüfkriterium kann der Wert der Leistungsaufnahme über einen vorgegebenen Zeitraum - vorzugsweise ein gleitendes Zeitfenster - sein. De facto ist in diesem Fall das Prüfkriterium somit die von dem Datenrouter innerhalb des vorgegebenen Zeitraums aufgenommene elektrische Energie.

Alternativ oder zusätzlich kann das Prüfkriterium auch die Schwankung der von dem Daten-Router 12 aufgenommene Leistung beziehungsweise des aufgenommenen Stroms sein. Für einen "eingefrorenen" Daten-Router 12 ist es charakteristisch, wenn dessen Leistungsaufnahme - und damit auch dessen Stromaufnahme - über einen längeren Zeitraum konstant oder nahezu konstant bleibt und keine größeren Schwankungen aufweist. Das "Einfrieren" des Daten-Router kann also daran erkannt werden, dass dessen Stromaufnahme nicht solche Schwankungen aufweist, wie sie durch die regelmäßige Kontaktaufnahme mit einer Basisstation verbunden sind.

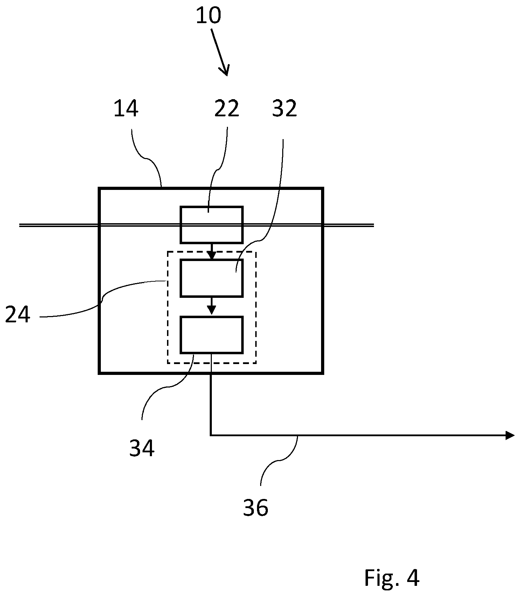

Vorzugsweise ist das Prüfkriterium aus einem typischen Muster der Leistungsaufnahme abgeleitet. Hierzu kann die Auswerteeinheit 24 ein neuronales Netz 32 (siehe Figur 4) aufweisen, das als binärer Klassifikator ausgebildet ist und das mit Trainingsdatensätzen trainiert ist, die von Datentupeln gebildet sind, welche die Leistungsaufnahme eines jeweiligen Daten-Routers 12 über einen vorgegebenen Zeitraum repräsentieren - vorzugsweise den zeitlichen Verlauf der Leistungs- oder Stromaufnahme des entsprechenden Daten-Routers 12 über einen vorgegebenen Zeitraum. Dabei können die Trainingsdatensätze die Leistungs- oder Stromaufnahme des Daten-Routers 12 für Zeiträume repräsentieren, in denen der Router ordnungsgemäß funktioniert oder alternativ für Zeiträume, in denen der Daten-Router 12 nicht ordnungsgemäß funktioniert. Vorzugsweise werden die Trainingsdatensätze für einen jeweiligen Daten-Router 12 individuell bestimmt, da die Leistungs- oder Stromaufnahme eines Daten-Routers 12 von den jeweiligen speziellen Gegebenheiten und auch vom Typ des Daten-Routers 12 und der daran angeschlossenen Datenverarbeitungsvorrichtungen abhängen kann.

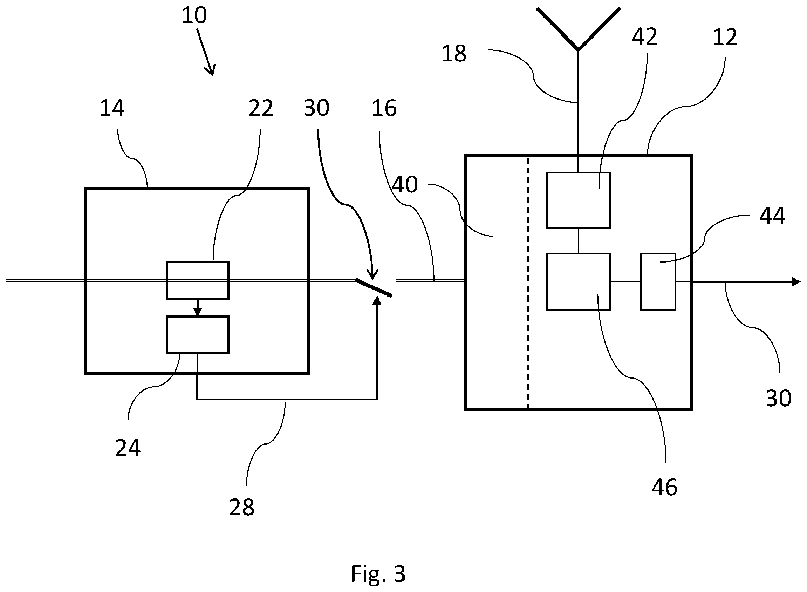

Falls die Auswertung der Messwerte durch die Auswerteeinheit 24 ergibt, dass der Daten-Router 12 nicht mehr ordnungsgemäß funktioniert, löst die Auswerteeinheit 24 entweder über eine Reset-Leitung 26 einen Reset des Daten-Routers 12 aus (siehe Figuren 1 und 2) oder sie bewirkt über eine Steuerleitung 28 ein Öffnen eines Schalters 30, um die Stromzufuhr zu dem Daten-Router 12 zu unterbrechen und auf diese Weise einen Neustart des Daten-Routers 12 zu erzwingen (siehe Figur 3).

Falls die Auswerteeinheit 24 ein als binärer Klassifikator ausgebildetes neuronales Netz 32 (siehe Figur 4) aufweist, kann das neuronale Netz von der Erfassungseinheit 22 aus aufgenommenen Messwerten gebildete aktuelle Datensätze beispielsweise dem Zustand "Datenrouter ok" oder "Datenrouter nicht ok" zuordnen. Sobald das neuronale Netz einen oder einen eine vorgegebene Anzahl von mehreren aufeinanderfolgen von der Erfassungseinheit 22 gebildeten Datensätzen dem Zustand "Datenrouter nicht ok" zugeordnet hat, kann ein mit dem neuronalen Netz 32 verbundenen Signalgenerator 34 ein Steuersignal generieren und über eine Signalleitung 36 ausgeben, das einen Reset oder Neustart des Daten-Routers 12 bewirkt. Die Signalleitung 36 entspricht somit beispielsweise der Reset-Leitung 26 aus Figur 1 oder 2 oder der Steuerleitung 28 aus Figur 3.

Die Erfassungseinheit 22 ist in diesem Fall dazu ausgebildet, Messwerte aufzunehmen und aus diesen Datensätze zu bilden, die die jeweils aktuelle Leistungsaufnahme des Daten-Routers 12 repräsentieren. Diese Datensätze werden dem als binärer Klassifikator ausgebildeten neuronalen Netz 32 der Auswerteeinheit 14 zugeführt und klassifiziert, indem das neuronale Netz einen Zugehörigkeitswert für den jeweils aktuellen Datensatz zu einer Zustandsklasse ermittelt, für die das neuronale Netz mittels Trainingsdatensätzen trainiert wurde. Die Trainingsdatensätze könne beispielsweise den Zustand "Daten-Route i.o." repräsentieren und damit eine Zustandsklasse definieren, die einem betriebsbereiten Daten-Router entspricht. Das neuronale Netz ermittelt für jeden aktuellen Datensatz einen Zugehörigkeitswert zu dieser Zustandsklasse und stellte diesen Zugehörigkeitswert an einem Knoten der Ausgangschicht des neuronalen Netzes bereit. Unterschreitet der Zugehörigkeitswert für die Zustandsklasse "Daten-Router i.o." einen vorgegebenen Mindestwert - der somit ein Prüfkriterium definiert - kann der dem neuronalen Netz 32 nachgeschaltete Signalgenerator 34 das Steuersignal generieren und über eine Signalleitung 36 ausgeben, dass einen Reset oder Neustart des Daten-Routers 12 bewirkt.

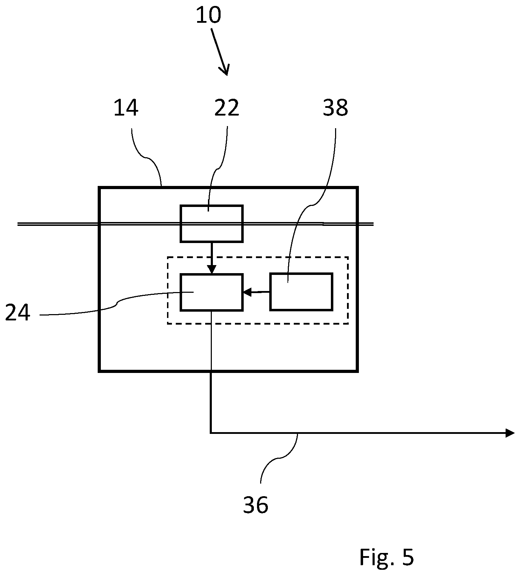

Figur 5 zeigt eine Überwachungsvorrichtung 14, bei der die Auswerteeinheit 24 mit einem Parameterspeicher 38 verbunden ist. Der Parameterspeicher 38 kann beispielsweise für ein jeweiliges System 10 individuelle Parameterwerte z.B. für die Leistungsaufnahme des Datenrouters 12 im Ruhezustand oder dergleichen enthalten, damit die Auswerteinheit 24 einen Reset oder Neustart des Daten-Routers 12 z.B. abhängig von standortindividuellen Kriterien für die Leistungsaufnahme auslösen kann.

In alternativen Ausführungsvarianten ist es vorgesehen, dass eine Erfassungseinheit 22' die Strom- oder Leistungsaufnahme einer Einheit oder Komponente des Daten-Routers 12 erfasst, insbesondere die Strom- oder Leistungsaufnahme des Mobilfunkmodem 42. Die Erfinder haben nämlich erkannt, dass die Leistungs- oder Stromaufnahme des Mobilfunkmodems 42 ebenfalls mit dem Betriebszustand des Daten-Routers 12 korreliert und entsprechend abnimmt, wenn der Daten-Router 12 "abgestürzt" oder "eingefroren" ist.

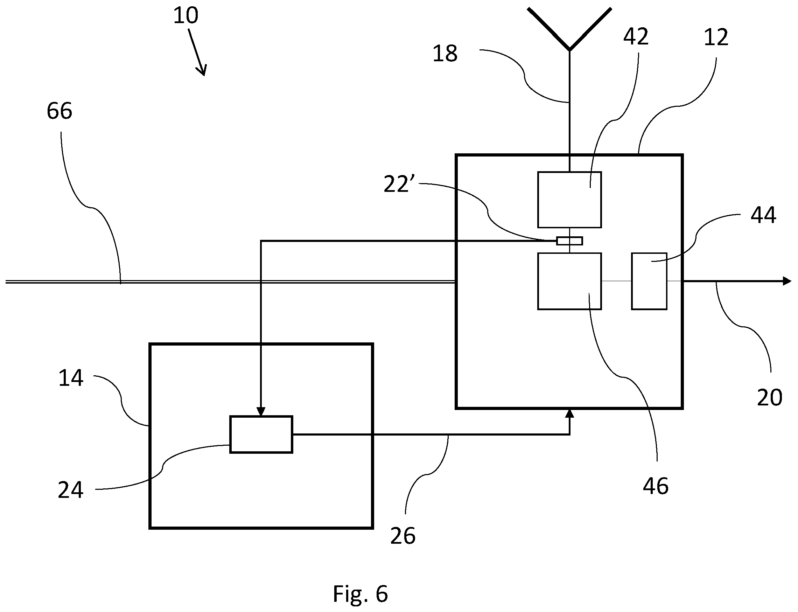

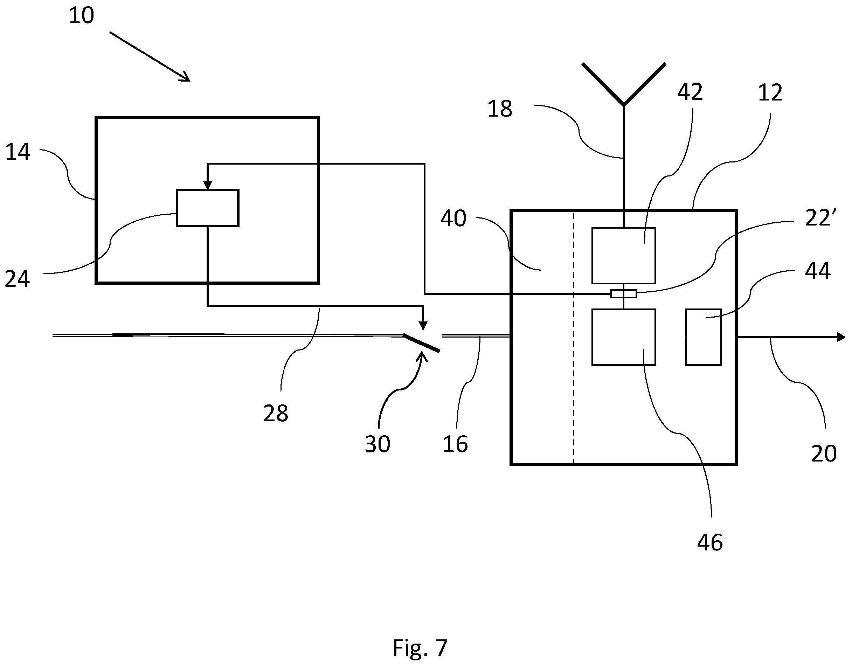

Bis auf die Ausgestaltung der Erfassungseinheit 22' entspricht die Ausführungsvariante, die in Figur 6 dargestellt ist, in etwa der Ausführungsvariante, die in Figur 1 oder 2 dargestellt ist. Entsprechend entspricht die Ausführungsvariante die in Figur 7 dargestellt ist, bis auf die Gestaltung der Erfassungseinheit 22' der Ausführungsvariante, die in Figur 3 dargestellt ist.

In Bezug auf die jeweilige Ausgestaltung der Auswerteeinheit 24 ist anzumerken, dass die Konfiguration der Auswerteeinheit24 bei den in Figuren 6 und 7 dargestellten Ausführungsvarianten jeweils an die entsprechend konfigurierte Erfassungseinheit 22' so angepasst ist, dass die von der Auswerteeinheit 24 angewandten Prüfungskriterien den Ausgangssignalen entsprechen, die von der Erfassungseinheit 22' im Betrieb geliefert werden. Falls die Auswerteeinheit 24 beispielsweise ein neuronales Netz 32 enthält, sind die Trainingsdatensätze, mit denen dieses trainiert wurde, mit einer entsprechenden Erfassungseinheit 22' generiert.

Falls die Auswerteeinheit 24 einen Parameterspeicher 38 (siehe Figur 5) enthält, dann sind die in dem Parameterspeicher 38 abgespeicherten Parameterwerte auf die Leistungs- oder Stromwerte abgestimmt, die die Erfassungseinheit 22' im Betrieb bzw. im Ruhezustand des Daten-Routers 12 erfasst.

Im Falle eines Daten-Routers 12' mit externem Netzteil 40' kann die Erfassungseinheit 22 auch in das externe Netzteil integriert werden. Das externe Netzteil kann im Sinne des Ausführungsbeispiels in Figur 3 auch die Überwachungsvorrichtung mit der Erfassungseinheit 22 und der Auswerteeinheit 24 aufweisen und zum kurzzeitigen Unterbrechen der Stromversorgung des Daten-Routers ausgebildet sein, falls der Daten-Router innerhalb eines vorgegebenen Zeitraums nicht eine vorgegebene Mindestenergie aufnimmt oder die Auswerteeinheit anderweitig bestimmt hat, dass der Daten-Router nicht wie vorgesehen funktioniert. In diesem Fall kann der Daten-Router selbst gegenüber herkömmlichen Daten-Routern mit externem Netzteil unverändert bleiben.

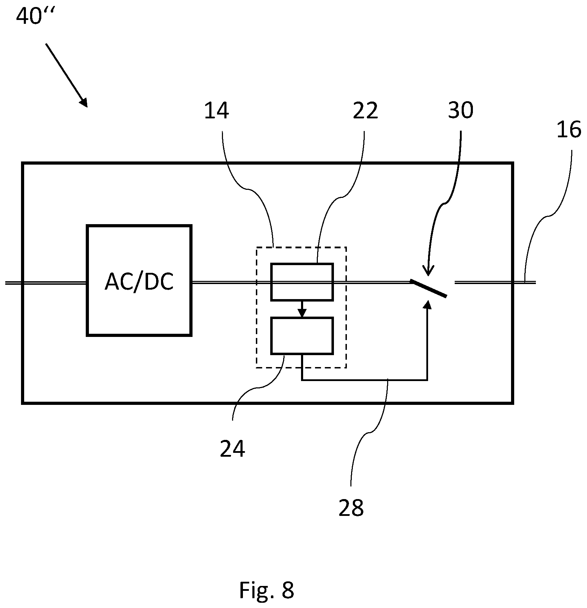

Ein externes (oder auch integriertes) Netzteil mit einer Erfassungseinheit, die dazu ausgebildet ist, fortlaufend die abgegebene Leistung zu erfassen und ein mit der abgegebenen Leistung korreliertes Ausgangssignal zu liefern, sowie mit einer Auswerteeinheit, die mit der Erfassungseinheit verbunden und dazu ausgebildet ist, das Ausgangssignal der Erfassungseinheit hinsichtlich wenigstens eines Prüfkriteriums zu analysieren und bei Erfüllen des Prüfkriteriums eine kurzzeitige Unterbrechung der Leistungsabgabe durch das Netzteil zu bewirken, stellt somit einen selbstständig schutzfähigen Gedanken dar. Ein derartiges externes Netzteil ist dabei im Unterschied zu anderen Netzteilen dazu ausgebildet, die Leistungsabgabe nur kurzfristig, z.B. für einige Sekunden bis zu wenigen Minuten, z.B. für 20 Sekunden bis zu maximal 120 Sekunden zu unterbrechen, um auf diese Weise einen Neustart eines im Betrieb an das Netzteil angeschlossenen elektronischen Geräts zu bewirken. Ein entsprechendes Netzteil 40" ist schematisch in Figur 8 abgebildet.
- 10: System
- 12: Daten-Router
- 14: Überwachungsvorrichtung
- 16: Stromversorgungsleitung
- 18: Antenne
- 20: Datenleitung
- 22. 22': Erfassungseinheit
- 24: Auswerteeinheit
- 26: Reset-Leitung
- 28: Steuerleitung
- 30: Schalter
- 32: neuronales Netz
- 34: Signalgenerator
- 36: Signalleitung (Steuerleitung oder Reset-Leitung)
- 38: Parameterspeicher
- 40: Netzteil
- 42: Mobilfunkmodem
- 44: kabelgebundene Schnittstelle
- 46: Prozessoreinheit

## Patentansprüche

1. System (10) umfassend einen Daten-Router (12) und eine mit dem Daten-Router verbundene oder in diesen integrierte Überwachungsvorrichtung (14), die dazu konfiguriert ist, eine Leistungsaufnahme des Daten-Routers (12) oder einer Komponente oder Einheit des Daten-Routers, deren Leistungsaufnahme mit dem Übertragen von Daten korreliert, zu überwachen und ein Neustarten oder einen Reset des Daten-Routers (12) in Abhängigkeit von dessen Leistungsaufnahme auszulösen.

2. System gemäß Anspruch 1, **dadurch gekennzeichnet, dass** der Daten-Router (12) elektronische Komponenten, ein Mobilfunkmodem (42) und eine kabelgebundene Schnittstelle (44) zum Anschließen weiterer Datenverarbeitungsgeräte über eine Datenleitung, umfasst, so wie ein Netzteil (40) zum Versorgen der elektrischen Komponenten des Datenrouters mit Strom.

3. System gemäß Anspruch 1 oder 2, **dadurch gekennzeichnet, dass** die Überwachungsvorrichtung (14) dazu ausgebildet ist, zu überwachen, ob der Daten-Router (12) oder eine Komponente (42) oder Einheit des Daten-Routers (12), deren Leistungsaufnahme mit dem Übertragen von Daten korreliert, innerhalb eines vorgegebenen Zeitraums eine vorgegebene Mindestenergie aufnimmt, und ein Neustarten oder einen Reset des Daten-Routers (12) auszulösen, wenn die in dem vorgegebenen Zeitraum aufgenommene Energie des Daten-Router geringer ist, als die vorgegebene Mindestenergie, wobei
der Wert für die vorgegebene Mindestenergie durch eine in einem Parameterspeicher (38) der Überwachungsvorrichtung (14) gespeicherte Variable repräsentiert ist.

4. System gemäß wenigstens einem der Ansprüche 1 bis 3, **dadurch gekennzeichnet, dass** die Überwachungsvorrichtung (14) eine Erfassungseinheit (22) in Form einer elektronischen Schaltung (22) aufweist, die dazu ausgebildet ist, fortlaufend die Stromaufnahme des nachgeschalteten Daten-Routers (12) oder einer Komponente oder Einheit des Daten-Routers, deren Leistungsaufnahme mit dem Übertragen von Daten korreliert, zu erfassen und ein mit der Leistungsaufnahme des Daten-Routers (12) oder einer Komponente oder Einheit des Daten-Routers, deren Leistungsaufnahme mit dem Übertragen von Daten korreliert, korreliertes Ausgangssignal zu liefern.

5. System gemäß wenigstens Anspruch 4, **dadurch gekennzeichnet, dass** die Überwachungsvorrichtung (14) eine Auswerteeinheit (24) aufweist, die mit der Erfassungseinheit (22) verbunden und dazu ausgebildet ist, das Ausgangssignal der Erfassungseinheit (22) hinsichtlich wenigstens eines Prüfkriteriums zu analysieren und bei Erfüllen des Prüfkriteriums einen Reset oder einen Neustart des Daten-Routers (12) auszulösen.

6. System gemäß wenigstens Anspruch 5, **dadurch gekennzeichnet, dass** die Auswerteeinheit (24) ein neuronales Netz (32) aufweist und das von der Erfassungseinheit (22) gelieferte Ausgangssignal Datensätze umfasst, die den jeweils aktuellen zeitlichen Verlauf der Leistungsaufnahme des Daten-Routers (12) oder einer Komponente oder Einheit des Daten-Routers, deren Leistungsaufnahme mit dem Übertragen von Daten korreliert, repräsentieren.

7. Überwachungsvorrichtung (14) für ein System gemäß der Ansprüche 1 bis 6, **gekennzeichnet durch** eine Erfassungseinheit (22) in Form einer elektronischen Schaltung, die dazu ausgebildet ist, fortlaufend die Stromaufnahme des nachgeschalteten Daten-Routers (12) oder einer Komponente oder Einheit des Daten-Routers, deren Leistungsaufnahme mit dem Übertragen von Daten korreliert, zu erfassen und ein mit der Leistungsaufnahme des Daten-Routers (12) oder der Komponente oder Einheit des Daten-Routers, deren Leistungsaufnahme mit dem Übertragen von Daten korreliert, korreliertes Ausgangssignal zu liefern, wobei die Überwachungsvorrichtung (14) außerdem eine Auswerteeinheit (24) aufweist, die mit der Erfassungseinheit (22) verbunden und dazu ausgebildet ist, das Ausgangssignal der Erfassungseinheit (22) hinsichtlich wenigstens eines Prüfkriteriums zu analysieren und bei Erfüllen des Prüfkriteriums einen Reset oder einen Neustart des Daten-Routers (12) auszulösen, wobei
die Auswerteeinheit ein als binärer Klassifikator konfiguriertes neuronales Netz (32) aufweist.

8. Verwendung eines Systems gemäß der Ansprüche 1 bis 6 und/oder einer Überwachungsvorrichtung gemäß Anspruch 7 in einer Datenverarbeitungseinrichtung einer Monitoringeinrichtung einer Anlage zur Gewinnung erneuerbarer Energie oder in einer Ladesäule für Elektrofahrzeug

9. Verfahren zum Überwachen eines Daten-Routers mit den Schritten:
- Erfassen mindestens eines mit der Leistungsaufnahme eines Daten-Routers oder einer Komponente oder Einheit des Daten-Routers, deren Leistungsaufnahme mit dem Übertragen von Daten korreliert, korrelierten Messwerts,
- Prüfen des Messwerts anhand eines Referenzkriteriums; und
- Neustarten oder Zurücksetzen des Routers in Abhängigkeit des Prüfergebnisses.

10. Verfahren gemäß Anspruch 9, wobei der mindestens eine mit der Leistungsaufnahme eines Daten-Routers oder der Komponente oder Einheit des Daten-Routers, deren Leistungsaufnahme mit dem Übertragen von Daten korreliert, korrelierte Messwert die Stromstärke des von dem Router oder der Komponente oder Einheit des Daten-Routers aufgenommenen Stroms ist.

11. Verfahren gemäß Anspruch 9 oder 10, wobei das Prüfen des Messwerts anhand eines Referenzkriteriums einen Vergleich mit einem Referenzwert einschließt.

12. Verfahren gemäß Anspruch 11, wobei der Referenzwert die Mindest-Energie oder
die Mindest-Strommenge ist, die der Daten-Router oder die Komponente oder Einheit des Daten-Routers, deren Leistungsaufnahme mit dem Übertragen von Daten korreliert, im betriebsfähigen Zustand innerhalb einer vorgegebenen Zeitdauer von einigen Minuten aufnimmt.

13. Verfahren gemäß Anspruch 9, wobei das Referenzkriterium ein durch ein mit entsprechenden Trainingsdatensätzen trainiertes neuronales Netz in Form eines binären Klassifikators gebildeter Zugehörigkeitswert zu einer Zustandsklasse des Daten-Routers oder der Komponente oder Einheit des Daten-Routers, deren Leistungsaufnahme mit dem Übertragen von Daten korreliert, ist.

14. Verfahren gemäß wenigstens eines der Ansprüche 8 bis 13, wobei das Neustarten des Daten-Routers durch eine kurzzeitige Unterbrechung der Stromzufuhr zu dem Daten-Router oder wobei das Neustarten des Daten-Routers durch Abgabe eines Reset-Signals an den Daten-Router bewirkt wird.

15. Netzteil mit
- einer Erfassungseinheit, die dazu ausgebildet ist, fortlaufend die abgegebene Leistung zu erfassen und ein mit der abgegebenen Leistung korreliertes Ausgangssignal zu liefern, sowie mit
- einer Auswerteeinheit, die mit der Erfassungseinheit verbunden und dazu ausgebildet ist, das Ausgangssignal der Erfassungseinheit hinsichtlich wenigstens eines Prüfkriteriums zu analysieren,
wobei das Netzteil dazu konfiguriert ist bei Erfüllen des Prüfkriteriums eine kurzzeitige Unterbrechung der Leistungsabgabe durch das Netzteil für eine Zeitdauer zwischen 5 Sekunden und 120 Sekunden zu bewirken.

## Claims

1. System (10) comprising a data router (12) and a monitoring device (14) connected to or integrated with the data router, the monitoring device (14) configured to monitor a power consumption of the data router (12) or a component or unit of the data router whose power consumption correlates with the transmission of data and to trigger a restart or reset of the data router (12) depending on its power consumption.

2. System according to claim 1, **characterized in that** the data router (12) comprises electronic components, a mobile radio modem (42) and a wired interface (44) for connecting further data processing devices via a data line, as well as a power supply unit (40) for supplying the electrical components of the data router with power.

3. System according to claim 1 or 2, **characterized in that** the monitoring device (14) is adapted to monitor whether the data router (12) or a component (42) or unit of the data router (12) whose power consumption correlates with the transmission of data consumes a predetermined minimum power within a predetermined period of time, and to trigger a restart or a reset of the data router (12) if the power consumed by the data router in the predetermined period of time is less than the predetermined minimum power, wherein the value for the predetermined minimum energy is represented by a variable stored in a parameter memory (38) of the monitoring device (14).

4. System according to at least one of claims 1 to 3, **characterized in that** the monitoring device (14) comprises a sensing unit (22) in the form of an electronic circuit (22) which is designed to continuously sense the power consumption of the downstream data router (12) or of a component or unit of the data router, power consumption of the downstream data router (12) or of a component or unit of the data router whose power consumption correlates with the transmission of data, and to provide an output signal correlated with the power consumption of the data router (12) or of a component or unit of the data router whose power consumption correlates with the transmission of data.

5. System according to at least claim 4, **characterized in that** the monitoring device (14) has an evaluation unit (24) which is connected to the sensing unit (22) and is designed to analyze the output signal of the sensing unit (22) with regard to at least one test criterion and to trigger a reset or a restart of the data router (12) if the test criterion is met.

6. System according to at least claim 5, **characterized in that** the evaluation unit (24) has a neural network (32) and the output signal supplied by the sensing unit (22) comprises data records which represent the respective current temporal course of the power consumption of the data router (12) or of a component or unit of the data router whose power consumption correlates with the transmission of data.

7. Monitoring device (14) for a system according to claims 1 to 6, **characterized by** a sensing unit (22) in the form of an electronic circuit which is designed to continuously sense the power consumption of the downstream data router (12) or of a component or unit of the data router whose power consumption correlates with the transmission of data and to provide an output signal correlated with the power consumption of the data router (12) or of the component or unit of the data router, the power consumption of which correlates with the transmission of data, the monitoring device (14) also having an evaluation unit (24) which is connected to the sensing unit (22) and is designed to analyze the output signal of the sensing unit (22) with regard to at least one test criterion and to trigger a reset or a restart of the data router (12) if the test criterion is fulfilled, wherein the evaluation unit comprises a neural network (32) configured as a binary classifier.

8. Use of a system according to claims 1 to 6 and/or a monitoring device according to claim7 in a data processing device of a monitoring device of a renewable energy generation plant or in a charging station for electric vehicle.

9. Procedure for monitoring a data router with the steps:
- sensing at least one measured value correlated with the power consumption of a data router or a component or unit of the data router whose power consumption correlates with the transmission of data,
- Checking the measured value against a reference criterion; and
- Restart or reset the router depending on the test result.

10. Method according to claim 9, wherein the at least one measured value correlated with power consumption of a data router or the component or unit of the data router whose power consumption correlates with the transmission of data is the amperage of current drawn by the router or the component or unit of the data router.

11. Method according to claim 9 or 10, wherein checking the measured value against a reference criterion includes comparing the measured value to a reference value.

12. Method according to claim 11, wherein the reference value is the minimum energy or the minimum amount of current that the data router or the component or unit of the data router whose power consumption correlates with the transmission of data consumes in the operable state within a predetermined period of time, a few minutes.

13. Method according to claim 9, wherein the reference criterion is a membership value formed by a neural network trained with appropriate training data sets in the form of a binary classifier to a state class of the data router or the component or unit of the data router whose power consumption correlates with the transmission of data.

14. Method according to at least one of claims 8 to 13, wherein restarting the data router is effected by momentarily interrupting the power supply to the data router, or wherein restarting the data router is effected by delivering a reset signal to the data router.

15. Power supply with
- a sensing unit adapted to continuously sense the power delivered and to provide an output signal correlated with the power delivered, and with
- an evaluation unit which is connected to the sensing unit and is designed to analyze the output signal of the sensing unit with regard to at least one test criterion,
wherein the power supply is configured to cause a momentary interruption of power output by the power supply for a period of time between 5 seconds and 120 seconds when the test criterion is met.

## Revendications

1. Système (10) comprenant un routeur (12) de données et un dispositif (14) de surveillance raccordé au routeur de données ou y étant intégré, qui est configuré pour surveiller une absorption de puissance du routeur (12) de données ou d'un composant ou d'une unité du routeur de données, dont l'absorption de puissance est en corrélation avec la transmission de données, et déclencher un démarrage nouveau ou une remise à l'état initial du routeur (12) de données, en fonction de son absorption de puissance.

2. Système suivant la revendication 1, **caractérisé en ce que** le routeur (12) de données comprend un composant électronique, un modem (42) de radiocommunication mobile et une interface (44) par câble pour le raccordement d'autres appareils de traitement de données par l'intermédiaire d'une ligne de données, ainsi qu'un bloc (40) d'alimentation pour l'alimentation en courant du composant électrique du routeur de données.

3. Système suivant la revendication 1 ou 2, **caractérisé en ce que** le dispositif (14) de surveillance est constitué pour surveiller si le routeur (12) de données ou un composant (42) ou une unité du routeur (12) de données, dont l'absorption de puissance est en corrélation avec la transmission de données, reçoit une énergie minimum donnée à l'avance pendant un laps de temps donné à l'avance et déclencher un démarrage nouveau, une remise à l'état initial du routeur (12) de données, si l'énergie absorbée dans le laps de temps donné à l'avance est plus petite que l'énergie minimum donnée à l'avance, dans lequel
la valeur pour l'énergie minimum donnée à l'avance est représentée par une variable mise en mémoire dans une mémoire (38) de paramètres du dispositif (14) de surveillance.

4. Système suivant au moins l'une des revendications 1 à 3, **caractérisé en ce que** le dispositif (14) de surveillance a une unité (22) de détection sous la forme d'un circuit (22) électronique, qui est constitué pour détecter en continu l'absorption de courant du routeur (12) de données ou d'un composant ou d'une unité du routeur de données monté en aval, dont l'absorption de puissance est en corrélation avec la transmission de données, et pour donner un signal de sortie corrélé à l'absorption de puissance du routeur (12) de données ou d'un composant ou d'une unité du routeur de données, dont l'absorption de puissance est en corrélation avec la transmission de données.

5. Système suivant au moins la revendication 4, **caractérisé en ce que** le dispositif (14) de surveillance a une unité (24) d'évaluation, qui est raccordée à l'unité (22) de détection et qui est constituée pour analyser le signal de sortie de l'unité (22) de détection en ce qui concerne au moins un critère de contrôle pour déclencher, si le critère de contrôle est satisfait, une remise à l'état initial ou un démarrage nouveau du routeur (12) de données.

6. Système suivant au moins la revendication 5, **caractérisé en ce que** l'unité (24) d'évaluation a un réseau (32) neuronal et le signal de sortie donné par l'unité (22) de détection comprend des ensembles de données, qui représentent respectivement la variation en fonction du temps de l'absorption de puissance du routeur (12) de données ou d'un composant ou d'une unité du routeur de données, dont l'absorption de puissance est en corrélation avec la transmission de données.

7. Dispositif (14) de surveillance d'un système suivant l'une des revendications 1 à 6, **caractérisé par** une unité (22) de détection sous la forme d'un circuit, qui est constituée pour détecter en continu l'absorption de courant du routeur (12) de données ou d'un composant ou d'une unité de routeur de données monté en aval, dont l'absorption de puissance est en corrélation avec la transmission de données, et pour donner un signal de sortie corrélé à l'absorption de puissance du routeur (12) de données ou du composant ou de l'unité du routeur données, dont l'absorption de puissance est en corrélation avec la transmission de données, dans lequel le dispositif (14) de surveillance a, en outre, une unité (24) d'évaluation, qui est raccordée à l'unité (22) de détection et qui est constituée pour analyser le signal de sortie de l'unité (22) de détection en ce qui concerne au moins un critère de contrôle et pour déclencher, si le critère de contrôle est satisfait, une remise à l'état initial ou un démarrage nouveau du routeur (12) de données, dans lequel
l'unité d'évaluation a un réseau (32) neuronal configuré en classificateur binaire.

8. Utilisation d'un système suivant l'une des revendications 1 à 6, et/ou d'un dispositif de surveillance suivant la revendication 7 dans un dispositif de traitement de données d'un dispositif de monitoring d'une installation d'obtention d'énergie renouvelable ou dans une colonne de charge pour véhicule électrique.

9. Procédé de contrôle d'un routeur de données comprenant les stades :
- détection d'au moins une valeur de mesure corrélée à l'absorption de puissance d'un routeur de données ou d'un composant ou d'une unité du routeur de données, dont l'absorption de puissance est en corrélation avec la transmission de données,
- contrôle de la valeur de mesure à l'aide d'un critère de référence ; et
- démarrage à nouveau ou remise à l'état initial du routeur en fonction du résultat du contrôle.

10. Procédé suivant la revendication 9, dans lequel la au moins une valeur de mesure corrélée à l'absorption de puissance du routeur de données ou du composant ou de l'unité du routeur de données, dont l'absorption de puissance est en corrélation avec la transmission de données, est l'intensité du courant absorbé par le routeur ou le composant ou l'unité de routeur de données.

11. Procédé suivant la revendication 9 ou 10, dans lequel le contrôle de la valeur de mesure, à l'aide d'un critère de référence, inclut une comparaison à une valeur de référence.

12. Procédé suivant la revendication 11, dans lequel la valeur de référence est l'énergie minimum ou la quantité de courant minimum, que le routeur de données ou le composant ou l'unité du routeur de données, dont l'absorption de puissance est en corrélation avec la transmission de données, absorbe dans l'état apte à fonctionner dans un laps de temps donné à l'avance de quelques minutes.

13. Procédé suivant la revendication 9, dans lequel le critère de référence est une valeur, formée par un réseau neuronal entraîné par des ensembles de données d'entraînement adéquats et sous la forme d'un classificateur binaire, d'appartenance à une classe d'état du routeur de données ou du composant ou de l'unité du routeur de données, dont l'absorption de puissance est en corrélation avec la transmission de données.

14. Procédé suivant au moins l'une des revendications 8 à 13, dans lequel on provoque le démarrage à nouveau du routeur de données par une interruption de courte durée, de l'arrivée du courant au routeur de données, ou dans lequel on provoque le démarrage à nouveau du routeur de données par envoi d'un signal de remise à l'état initial au routeur de données.

15. Bloc d'alimentation comprenant
- une unité de détection, qui est constituée pour détecter en continu la puissance distribuée et pour donner un signal de sortie corrélé à la puissance distribuée, ainsi que
- une unité d'évaluation, qui est raccordée à l'unité de détection et qui est configurée pour analyser le signal de sortie de l'unité de détection en ce qui concerne au moins un critère de contrôle,
dans lequel le bloc d'alimentation est configuré pour provoquer, si le critère de contrôle est satisfait, une interruption de courte durée de la distribution de puissance par le bloc d'alimentation pendant une durée comprise entre 5 secondes et 120 secondes.
